Europäisches Patentamt

European Patent Office

Office européen des brevets

(11) Veröffentlichungsnummer: **0 182 207 B1**

# EUROPÄISCHE PATENTSCHRIFT

(45) Veröffentlichungstag der Patentschrift: **16.10.91**

(51) Int. Cl.⁵: **C09B 67/16**

(21) Anmeldenummer: **85114159.8**

(22) Anmeldetag: **07.11.85**

(54) **Verfahren zur Herstellung von farbstarken Polyhalogenkupferphthalocyaninen.**

(30) Priorität: **17.11.84 DE 3442118**

(43) Veröffentlichungstag der Anmeldung:
**28.05.86 Patentblatt 86/22**

(45) Bekanntmachung des Hinweises auf die
Patenterteilung:
**16.10.91 Patentblatt 91/42**

(84) Benannte Vertragsstaaten:
**CH DE FR GB IT LI**

(56) Entgegenhaltungen:
**EP-A- 0 058 888**
**FR-A- 2 427 366**

(73) Patentinhaber: **BASF Aktiengesellschaft**
**Carl-Bosch-Strasse 38**
**W-6700 Ludwigshafen(DE)**

(72) Erfinder: **Kranz, Joachim, Dr.**
**Rheinrugenstrasse 22**
**W-6700 Ludwigshafen(DE)**

**Beschreibung**

Bei der Halogenierung von Kupferphthalocyanin wird ein amorphes bis mikrokristallines agglomeriertes rohes Polyhalogenkupferphthalocyanin erhalten, das wegen der hohen Agglomeration trübe und farbschwache Färbungen liefert. Aus diesem Grunde wird das Rohpiment durch Rekristallisation in coloristisch optimale Pigmentformen überführt. Dieser Vorgang - auch als Formierung oder Finish bezeichnet - erfolgt z.B. in der Wärme in 90 bis 98 gew-%iger Schwefelsäure, in wäßrigen Suspensionen von aliphatischen Alkoholen, aliphatischen Aminen, aliphatischen Carbonsäuren, deren Alkylestern, Formamiden oder Acetamiden oder von Alkylestern aromatischer Carbonsäuren (EP-A-58 888), in Xylol (DE-PS 20 13 818) oder o-Nitrophenol (DE-PS 12 42 180).

Coloristisch interessante Pigmentformen werden durch Wärmebehandlung in o-Nitrophenol erhalten. Dieses Formierungsmedium hat jedoch erhebliche Nachteile: es riecht stark, da es bereits bei Raumtemperatur einen merklichen Dampfdruck aufweist, es sublimiert leicht und ist mit Wasserdampf flüchtig. Weitere Nachteile sind, daß o-Nitrophenol einen niedrigen Schmelzpunkt hat und in Wasser merklich löslich ist, wodurch Verluste bei der Zurückgewinnung entstehen.

Ein zusätzlicher Nachteil ist, daß das bei der Abtrennung des Nitrophenols durch Zugabe von Alkalimetallhydroxid entstehende o-Nitrophenolatanion eine hohe Affinität zum Polyhalogenkupferphthalocyaninpigment aufweist, so daß zur weitgehend quantitativen Entfernung des Nitrophenolats ein langer Waschvorgang notwendig ist.

Aufgabe der vorliegenden Erfindung war es, ein Verfahren zur Formierung von rohem feinteiligem agglomeriertem Polyhalogenkupferphthalocyanin bereitzustellen, das Pigmente liefert, wie sie nach dem Nitrophenol-Verfahren erhalten werden und das die Nachteile des Nitrophenol-Verfahrens nicht aufweist.

Es wurde gefunden, daß man coloristisch wertvolle Pigmentformen von Polyhalogenkupferphthalocyaninen durch Behandeln der feinteiligen agglomerierten Polyhalogenkupferphthalocyaninen in organisch-wäßriger Phase in der Wärme erhält, wenn man das feinteilige agglomerierte Rohpigment mit Benzoesäure, Tolylsäure, Ethylbenzoesäure oder Gemischen davon auf 80 bis 130°C erwärmt und bei diesen Temperaturen hält.

Das Verfahren liefert farbstarke und leicht dispergierbare Polyhalogenkupferphthalocyaninpigmente. Im Vergleich zu den durch Formierung in o-Nitrophenol erhaltenen Polyhalogenkupferphthalocyaninpigmenten des Standes der Technik, liefern die nach dem erfindungsgemäßen Verfahren erhaltenen Pigmente, Färbungen mit gleichen bis überlegenen coloristischen Eigenschaften.

Überraschend war, daß bei dem erfindungsgemäßen Verfahren im Vergleich zum Verfahren der DE-PS 12 42 180 deutlich weniger Finishmedium benötigt wird. Weiterhin war es überraschend, daß die Teilchengröße der Pigmente durch Variation der Menge an dem erfindungsgemäß zu verwendenden Formierungsmedium beeinflußt werden kann, so daß nach dem erfindungsgemäßen Verfahren die Teilchengröße von feinteilig-lasierend bis grobkristallindeckend gezielt eingestellt werden kann.

Das erfindungsgemäße Verfahren hat weiter noch den Vorteil, daß das verwendete Finishmedium nach dem Abtrennen des Pigments leicht und ohne wesentliche Verluste zurückgewonnen werden kann.

Das Verfahren gemäß der Erfindung wird im allgemeinen so durchgeführt, daß das bei der Synthese erhaltene rohe Polyhalogenkupferphthalocyanin, vorzugsweise in Form des wäßrigen Preßkuchens mit den Carbonsäuren gemischt wird. Dieses Gemisch wird auf Temperaturen von 80 bis 130°C, vorzugsweise auf 90°C bis zum Siedepunkt des Gemisches erwärmt und auf Temperatur gehalten bis die gewünschte Pigmentform entstanden ist. Für das Verfahren ist entscheidend, daß die Carbonsäure bzw. die Carbonsäuren in der Suspension während der Formierung in flüssiger Form vorliegen; gegebenenfalls muß bei Temperaturen oberhalb von 100°C, z.B. unter Druck gearbeitet werden.

Nachdem die gewünschte Pigmentform vorliegt, werden nach dem Abkühlen auf Temperaturen zwischen 70 und 90°C, die Carbonsäuren durch Zugeben von Alkalimetallhydroxid, z.B. 10 Gew.-% Kalilauge oder vorzugsweise Natronlauge gelöst und das Pigment durch Filtrieren oder Zentrifugieren isoliert und mit Wasser neutral gewaschen.

Aus dem alkalischen Filtrat können die Carbonsäuren durch Ansäuern gefällt und zurückgewonnen werden. Wegen der geringen Löslichkeit treten bei der Wiedergewinnung nur Verluste von ca. 2 bis 3 Gew.-% an dem Finishmedium ein. Das erhaltene feuchte Filtergut kann direkt wieder zur Formierung verwendet werden.

Als Formierungsdmedium kommen Benzoesäure, die Tolylsäuren, die Ethylbenzoesäuren oder Gemische dieser Säuren in Betracht. Für die Formierung ist entscheidend, daß die Säuren unter den angewendeten Temperaturen flüssig sind. Dementsprechend sind von den reinem Carbonsäuren o- und m-Tolylsäure und o- und m-Ethylbenzoesäure bevorzugt, da man mit diesen Carbonsäuren die Formierung in Gegenwart von Wasser unter Normaldruck durchführen kann. Benzoesäure, p-Tolylsäure und p-Ethylbenzoesäure weisen Schmelzpunkte von oberhalb 120°C, weshalb diese Säuren allein nur bei Temperaturen oberhalb des Schmelzpunktes, d.h. unter Druck zur Formierung verwendet werden können.

Da Gemische von Benzoesäure mit o- und m-Tolylsäure bzw. mit o- und m-Ethylbenzoesäure Schmelzpunkte von um 100°C und darunter aufweisen, kann man mit Gemischen aus einer oder mehreren der genannten Alkylbenzoesäuren mit Benzoesäure auch unter Normaldruck bei Temperaturen von 80 bis zur Siedetemperatur formieren. Dabei kann der Siedepunkt des Wassers außer durch Anwendung von Druck auch durch Zugeben von Salz, z.B. Natriumchlorid oder Natriumsulfat erhöht werden.

So kann z.B. der Schmelzpunkt technischer Benzoesäure von ca. 120°C durch Zumischen von o- oder m-Tolylsäure im wäßrigen Medium bis auf ca. 75°C herabgesetzt werden: ein Gemisch aus 90 Gew.-% Benzoesäure und 10 Gew.-% o- oder m-Tolylsäure hat einen Schmelzpunkt von etwa 95°C , ein 8 : 2-Gemisch einen solchen von etwa 85°C und ein 7 : 3-Gemisch von ungefähr 75°C.

Aus coloristischen und verfahrenstechnischen Gründen sind o- und m-Tolylsäure, o- und m-Ethylbenzoesäure, Gemische dieser Säuren und Gemische aus mindestens einer dieser Carbonsäuren mit Benzoesäure besonders bevorzugt.

Aus wirtschaftlichen Gründen wird man die Formierung insbesondere in o- und m-Tolylsäure, in Gemischen dieser Säuren oder in Gemischen aus mindestens einer dieser Säuren mit Benzoesäure durchführen. Die Menge an Formierungsmedium ist nicht kritisch, wenn diese ausreichend ist, daß das Rohpigment von den flüssigen Säuren umhüllt wird. In der Regel beträgt die Menge der Säuren das 0,3- bis 5-fache, vorzugsweise das 0,5- bis 2-fache der Gewichtsmenge an Rohpigment.

Als Polyhalogenphthalocyanine kommen in Betracht: Polyhalogenkupferphthalocyanine mit 10 bis 16 Chloratomen und Polybromchlorkupferphalocyanine mit 0 bis 13, vorzugsweise 4 bis 12 Chloratomen und 14 bis 2, vorzugsweise 12 bis 4 Bromatomen im Molekül.

Das Verfahren soll durch die folgenden Beispiele weiter erläutert werden. Die im folgenden angegebenen Teile und Prozentangaben beziehen sich auf das Gewicht. Die Temperatur ist in Grad Celsius angegeben.

CuPc = Kupferphthalocyanin.

Beispiel 1

In einem Rührgefäß wurden 51 Teile rohes Polychlor-CuPc (Chlorgehalt:-49,5%) in Form des 34%igen wäßrigen Preßkuchens mit 35 Teilen m-Tolylsäure gemischt und unter Rühren erwärmt. Bei Temperaturen zwischen 80 und 90°C entstand ein "Flush", d.h. das Rohpigment ging in die schmelzende bzw. geschmolzene Tolylsäure über. Das Gemisch wurde 8 h bei 100°C gerührt, wobei das Rohpigment in die Pigmentform, die aus kompakten, isometrischen Teilchen bestand, überführt wurde.

Nach dem Abkühlen auf 90°C wurde die auf die angewendete Menge Tolylsäure berechnete Menge 10%ige Natronlauge zugegeben und das Pigment abfiltriert. Das Filtergut wurde neutral gewaschen und getrocknet.

Ausbeute: 50 Teile eines farbstarken und farbtonreinen Grünpigments, das Färbungen mit hoher Lasur liefert und eine hohe Pulverweichheit aufwies. Das Pigment gab im Vergleich zu einem Polychlor-CuPc-Pigment, das nach dem Verfahren der DE-PS 12 42 180 erhalten wurde, in der Farbstärke, im Farbton, in der Brillanz und der Reinheit des Farbtons sowie in der Lasur praktisch identische Färbungen.

Aus der alkalischen Mutterlauge und dem ersten Filtrat beim Waschen wurde durch Ansäuern mit Salzsäure oder Schwefelsäure nach dem Abkühlen etwa 97 % der zur Formierung verwendeten m-Tolylsäure zurückgewonnen.

Beispiel 2

Es wurde wie in Beispiel 1 verfahren, jedoch anstelle von m-Tolylsäure die gleiche Menge an o-Tolylsäure verwendet. Es wurde ein Grünpigment mit ganz ähnlichen coloristischen und anwendungstechnischen Eigenschaftgen erhalten. Aus der alkalischen Mutter- und Waschlauge wurden durch Ansäuern ca. 95 % der eingesetzten o-Tolylsäure zurückgewonnen.

Beispiel 3

Es wurde wie in Beispiel 1 verfahren, jedoch wurde anstelle von m-Tolylsäure ein 1 : 1-Gemisch aus m- und o-Tolylsäure verwendet. Es resultierte ein Grünpigment mit praktisch den gleichen coloristischen und anwendungstechnischen Eigenschaften. Das Finishmedium wurde analog Beispiel 1 zurückgewonnen (96 % des eingesetzten Tolylsäuregemisches).

Beispiel 4

Es wurde wie in Beispiel 1 verfahren, jedoch wurde anstelle des Preßgutes von hochchloriertem Kupferphthalocyanin ein wäßriger Preßkuchen von Polybromchlor-CuPC (Chlorgehalt: 7 %, Bromgehalt: 58 %) verwendet. Die Formierung erfolgte durch sechsstündiges Rühren bei 100°C. Nach der Aufarbeitung wurde ein Pigment erhalten, das gelbstichige Grünfärbungen mit hoher Farbstärke und Reinheit liefert und das eine gute Pulverweichheit aufweist. Das Formierungsmedium wurde zu etwa 97 % zurückgewonnen.

Beispiel 5

Es wurde wie in Beispiel 4 angegeben verfahren, jedoch anstelle von m-Tolylsäure die gleiche Menge an o-Tolylsäure verwendet. Es wurde ein Grünpigment erhalten, das praktisch die gleiche Coloristik aufwies wie das nach Beispiel 4 erhaltene. Das Formierungsmittel wurde zu ca. 95 % zurückgewonnen.

Beispiel 6

Es wurde nach Beispiel 4 verfahren, jedoch anstelle von m-Tolylsäure ein 1 : 1-Gemisch von o- und m-Tolylsäure verwendet. Das erhaltene Grünpigment entspricht in allen coloristischen Eigenschaften den nach den Beispielen 4 und 5 erhaltenen Pigmenten. Das Tolylsäuregemisch wurde zu 95 % zur erneuten Verwendung zurückgewonnen.

Beispiel 7

Es wurde wie in Beispiel 1 verfahren, jedoch anstelle von Polychlor-CuPc rohes Polybromchlor-CuPc (Chlorgehalt: 26 %, Bromgehalt: 33 %) in Form des wäßrigen Preßkuchens verwendet. Das Gemisch wurde 4 Std. bei 100°C gerührt. Nach dem Aufarbeiten wurde ein pulverweiches Grünpigment isoliert, das gelbstichige Grünfärbungen von hoher Farbtonreinheit liefert. Das Formierungsmittel wurde zu 97 % zurückgewonnen.

Beispiel 8

In einem Rührgefäß wurden 50 Teile rohes Polybromchlor-CuPc (Chlorgehalt: 7 %, Bromgehalt: 58 %) in Form des 24 %igen wäßrigen Pigmentpreßkuchens mit 50 Teilen Benzoesäure und 30 g Kochsalz auf Siedetemperatur erhitzt. Nach fünfstündigem Rühren bei 103 bis 106°C war die Rekristallisation beendet. Nach der Aufarbeitung entsprechend Beispiel 1 wurde ein Pigment erhalten, das dem nach Beispiel 4 erhältlichen in den anwendungstechnischen Eigenschaften entsprach, ca. 95 % der eingesetzten Benzoesäure wurden zurückgewonnen.

Das gleiche coloristische Ergebnis wurde nach Austausch von Kochsalz durch Natriumsulfat erhalten.

Beispiel 9

Es wurde wie in Beispiel 3 verfahren, jedoch wurde statt des 1 : 1-Gemisches der beiden Tolylsäuren ein Gemisch aus Benzoesäure und o-Tolylsäure im Gewichtsverhältnis 9 : 1 angewendet. Es wurde ein Grünpigment isoliert, das dem nach Beispiel 3 erhaltenen in den coloristischen und anwendungstechnischen Eigenschaften entspricht.

Das gleiche vorteilhafte Ergebnis wurde erzielt, wenn als Formierungsmedium ein Gemisch aus Benzoesäure und o-Tolylsäure im Verhältnis 8 : 2 oder 7 : 3 Teilen verwendet wurde.

Das gleiche Ergebnis wurde auch erzielt, wenn in den vorstehend genannten Gemischen die o-Tolylsäure durch m-Tolylsäure oder ein Gemisch aus o-Tolyl- und m-Tolylsäure ersetzt wurde.

Mit gleichem Erfolg konnte die o- und m-Tolylsäure durch o- und m-Ethylbenzoesäure ersetzt werden.

Beispiel 10

Es wurde wie in Beispiel 6 verfahren, jedoch wurde als Finishmedium ein Gemisch aus Benzoesäure und o- und/oder m-Tolylsäure verwendet.

EP 0 182 207 B1

|   | Benzoe- | Säuren o-Tolyl- | m-Tolyl |
|---|---|---|---|
|   | [Teile] |  |  |
| a ) | 9 | 1 | - |
| b ) | 9 | - | 1 |
| c ) | 8 | 2 | - |
| d ) | 8 | - | 2 |
| e ) | 7 | - | 3 |
| f ) | 7 | 3 | - |
| g ) | 7 | 2 | 1 |
| h ) | 8 | 1 | 1 |

Es wurden Pigmente erhalten, die in den coloristischen und anwendungstechnischen Eigenschaften den nach Beispiel 6 erhaltenen entsprechen.

Aus den Mutterlaugen konnte in allen Fällen das Formierungsmedium zu über 95 % zurückgewonnen werden.

Entsprechende Ergebnisse wie unter a) bis h) wurden erzielt, wenn o- und/oder m-Tolylsäure durch die entsprechenden Ethylbenzoesäuren ersetzt wurde.

Beispiel 11

Es wurde wie in Beispiel 4 verfahren: 51 Teile rohes Polybrom-chlor-CuPc (7 % Cl, 58 % Br) in Form des 34 %igen wäßrigen Preßkuchens wurden mit 35 Teilen eines Gemisches aus 80 % Benzoesäure und 20 % Tolylsäure 6 Std. bei Rückflußtemperatur gehalten. Das Pigment wurde entsprechend Beisiel 4 isoliert. Das Formierungsmedium wurde zu 95 % aus der alkalischen Mutterlauge und dem ersten Waschwasser zurückgewonnen.

Beispiel 12

Es wurde wie in Beispiel 11 verfahren, jedoch wurden 70 Teile des Säuregemisches verwendet.

Die nach den Beispielen 11 und 12 erhaltenen Pigmente wurden mit dem nach der DE-PS 12 42 180, Beispiel 3 aus dem gleichen Rohpigment erhältlichen Pigment im Weißverschnitt (1/9 Standardfarbtiefe) verglichen.

| Pigment | FAE[1] | HGD | C | Lasur gegen Vergl. | |
|---|---|---|---|---|---|
| Beisp. 11 | 98 | $\Delta$+0,1[2] | $\Delta$+1,6[4] | +4 lasierender | als der |
| Beisp. 12 | 96 | $\Delta$-0,2[3] | $\Delta$+1,6[4] | -2 etwas deckender | Vergl. |
| St.d.T. | 100 | 165,64 | 47,75 | Vergleich | |

[1] Färbeäquivalent

[2] blauer = +
[3] gelber = -
[4] deutlich reiner im Farbton } als der Vergleich

Beispiel 13

Es wurde wie in Beispiel 11 verfahren, jedoch wurden 100 Teile m-Tolylsäure verwendet und das Gemisch 3 Std. bei Rückflußtemperatur gehalten. Das Formierungsmedium wurde zu über 95 % zurückgewonnen.

Beispiel 14

5

Es wurde wie in Beispiel 13 verfahren, jedoch wurde das Gemisch 3 Std. bei 130°C (unter Druck) gehalten.

Die nach den Beispielen 13 und 14 erhaltenen Pigmente wurden mit dem nach der DE-PS 12 42 180, Beispiel 3 aus dem gleichen rohen Polybrom-chlor-CuPc erhältlichen Pigment (St.d.T.) im Weißverschnitt verglichen.

| Pigment | FAE[1] | HGD | C | Lasur | |
|---|---|---|---|---|---|
| Beisp. 13 | 97 | $\Delta$+0,2[2] | $\Delta$+1,2[4] | +5 | deutl.lasierender) als |
| Beisp. 14 | 96 | $\Delta$-0,3[3] | $\Delta$+1,2[4] | -4 | deckender }der |
| | | | | | ) Vergl. |
| St.d.T. | 100 | 165,64 | 47,75 | Vergleich | |

[1] Farbeäquivalent

[2] blauer
[3] gelber     als der Vergleich
[4] deutlich reiner
   im Farbton

## Patentansprüche

1. Verfahren zur Herstellung von farbstarken Polyhalogenkupferphthalocyaninen durch Rekristallisieren von feinteiligen agglomerierten rohen Polyhalogenkupferphthalocyaninen in organisch-wäßriger Phase in der Wärme, dadurch gekennzeichnet, daß man das feinteilige agglomerierte Rohpigment mit Benzoesäure, Tolylsäure, Ethylbenzoesäure oder Gemischen davon auf 80 bis 130°C erwärmt und bei diesen Temperaturen hält.

2. Verfahren gemäß Anspruch 1, dadurch gekennzeichnet, daß das Verhältnis Rohpigment zu den Carbonsäuren 1 : 0,5 bis 1 : 2 Gew.-Teilen beträgt.

3. Verfahren gemäß Anspruch 1 oder 2, dadurch gekennzeichnet, daß man Benzoesäure, o-Tolylsäure, m-Tolylsäure, 2-, 3- oder 4-Ethylbenzoesäure oder Gemische dieser Carbonsäuren verwendet.

4. Verfahren gemäß Anspruch 1, 2 oder 3, dadurch gekennzeichnet, daß das Gemisch auf Temperaturen zwischen 90 und dem Siedepunkt erwärmt.

## Claims

1. A process for the preparation of a polyhalocopper phthalocyanine having high color strength by recrystallization of a finely divided, agglomerated crude polyhalo-copper phthalocyanine in an inorganic aqueous phase at elevated temperatures, wherein the said crude pigment is heated to 80-130°C with benzoic acid, toluic acid, ethylbenzoic acid or a mixture of these, and kept at this temperature.

2. A process as claimed in claim 1, wherein the weight ratio of crude pigment to the carboxylic acids is from 1:0.5 to 1:2.

3. A process as claimed in claim 1 or 2, wherein benzoic acid, o-toluic acid, m-toluic acid, 2-, 3- or 4-ethylbenzoic acid or a mixture of these carboxylic acids is used.

4. A process as claimed in claim 1, 2 or 3, wherein the mixture is heated at from 90°C to boiling point.

## Revendications

1. Procédé de préparation de phtalocyanines de cuivre polyhalogénées à haut pouvoir colorant par recristallisation, en phase hydro-organique et à la chaleur, de phtalocyanines de cuivre polyhalogénées brutes agglomérées en fines particules, caractérisé en ce qu'on chauffe le pigment brut aggloméré en fines particules à une température de 80 à 130°C avec de l'acide benzoïque, de l'acide toluique, de l'acide éthylbenzoïque ou des mélanges de ces acides.

2. Procédé selon la revendication 1, caractérisé en ce que le rapport du pigment brut aux acides carboxyliques est compris entre 1 : 0,5 et 1 : 2.

3. Procédé selon la revendication 1 ou 2, caractérisé en ce qu'on utilise de l'acide benzoïque, de l'acide o-toluique, de l'acide m-toluique, de l'acide 2-, 3- ou 4-éthylbenzoïque ou des mélanges de ces acides carboxyliques.

4. Procédé selon l'une quelconque des revendications 1 à 3, caractérisé en ce qu'on chauffe le mélange à des températures comprises entre 90°C et le point d'ébullition.